# EUROPÄISCHE PATENTSCHRIFT

(11) **EP 1 599 673 B1**
(45) Veröffentlichungstag und Bekanntmachung des Hinweises auf die Patenterteilung: **20.04.2011**
(21) Anmeldenummer: 03795886.5
(22) Anmeldetag: 12.12.2003
(51) Int. Cl.: F04B 1/04, F04B 53/10, F04B 53/16, B60T 17/02

(54) **KOLBENPUMPE**
PISTON PUMP
POMPE A PISTON

(30) Priorität: 12.02.2003 DE 10305949; 06.10.2003 DE 10346237
(43) Veröffentlichungstag der Anmeldung: 30.11.2005
(73) Patentinhaber: Continental Teves AG & Co. oHG, 60488 Frankfurt (DE)
(72) Erfinder: DINKEL, Dieter, 65824 Schwalbach (DE); OTTO, Albrecht, 61137 Schöneck (DE); ZENTGRAF, Hans-Georg, 65428 Rüsselsheim (DE)
(86) Internationale Anmeldenummer: PCT/EP2003/014100
(87) Internationale Veröffentlichungsnummer: WO 2004/072478

(56) Entgegenhaltungen:
- DE-A- 10 022 811
- DE-A- 10 112 618
- DE-A- 19 732 771
- DE-A- 19 753 083
- DE-A- 19 854 719

## Beschreibung

Die Erfindung betrifft eine Kolbenpumpe mit den Merkmalen des Oberbegriffs des Patentanspruchs 1.

Aus der DE 100 22 811 A1 ist eine Kolbenpumpe bekannt, die unter anderem über eine in einer Stufenbohrung gehaltene Laufbuchse verfügt. Diese wird von einem, an einem Boden der Laufbuchse axial anliegenden Verschluß in die Stufenbohrung gepresst. Nachteilig ist bei dieser Bauweise, daß die in die Laufbuchse eingeleiteten Einpreß- und Befestigungskräfte zu einer Deformation eines Sitz für ein Rückschlagventil führen können. Dadurch wird die Funktionssicherheit der Fahrzeugbremsanlage gefährdet.

Ferner geht aus DE 101 12 618 A1 eine Kolbenpumpe mit einem in einer massiven Laufbuchse geführten Kolben hervor, wobei zwischen einem an einer planen Fläche der Laufbuchse angeordneten Rückschlagventil und einem in die Pumpenbohrung eingesetzten Verschluß eine Pulsationsglättungseinrichtung vorgesehen ist, um am Auslaß der Kolbenpumpe die Geräusche zu mindern.

Aus DE 198 54 719 A1 ist eine Kolbenpumpe bekannt, deren Laufbuchse im Pumpengehäuse von einem Druckventilkörper niedergehalten wird, wobei zwischen einem in der Laufbuchse geführten Kolben und einer ebenen Fläche des Druckventilkörpers eine Rückstellfeder eingespannt ist. Zur Aufnahme des Druckventils im Druckventilkörper ist auf der vom Rückschlagventil abgewandten Körperfläche des Druckventilkörpers eine Stufenbohrung vorgesehen, in der ein Ventilkörper sowie auch eine den Ventilkörper des Druckventils beaufschlagende Feder angeordnet ist.

In der DE 197 53 083 A1 wird eine gattungsgemäße Kolbenpumpe mit einem in einer Laufbuchse geführten Kolben beschrieben. Der Gegenstand des Patentanspruchs 1 ist in zweiteiliger Form gegenüber dieser Druckschrift abgegrenzt. Ein Verschluß liegt in Axialrichtung unmittelbar an einem Boden der Laufbuchse an und presst diese axial gegen eine Bohrungsstufe. Die über die Laufbuchse und über eine konische Anlagefläche der Laufbuchse im Bereich eines Rückschlagventils eingeleiteten Kräfte können eine Deformation der Laufbuchse im Bodenbereich des für das Rückschlagventil vorgesehenen Ventilsitzes verursachen. Eine den Kolben beaufschlagende Rückstellfeder stützt sich mit einem Federende an dem ebenen, dickwandigen Boden der Laufbuchse ab, wobei der Boden infolge der Dickwandigkeit in einem axialen Versatz zum Federende den Ventilsitz aufweist. Ferner weist der Verschluß eine Sackbohrung zur Aufnahme des Rückschlagventils auf, wobei die vom Verschluß außerhalb der Sackbohrung ausgeübten Axialkräfte großflächig auf den Boden der Laufbuchse wirksam sind.

Es ist daher eine Aufgabe der vorliegenden Erfindung, Mittel anzugeben, um eine Integration einer Kolbenpumpenbaueinheit in einen Aufnahmekörper zu ermöglichen, wobei insbesondere Ventilsitze von Rückschlagventilen frei von montagebedingten Einpreß- oder Befestigungskräften sowie dadurch hervorgerufene Deformationen gehalten werden können.

Die Aufgabe wird für eine Kolbenpumpe der eingangs genannten Art durch die kennzeichnenden Merkmale des Patentanspruchs 1 gelöst.

Dadurch ist eine besonders kurz bauende Anordnung der beteiligten Bauteile gegeben, und im Bodenbereich der Laufbuchse kann ein Sitz für ein Rückschlagventil vorgesehen werden. Der Sitz ist vorzugsweise an dem Kragen vorgesehen.

In vorteilhafter Ausgestaltung der Erfindung weist die Stufenbohrung eine Bohrungsstufe mit einem Durchmesser auf, welcher größer als der Radialflansch ausgebildet ist, so daß eine ausschließlich axiale Anlage des Radialflansch vorliegt. Dadurch wird ein - zu Unrundheiten oder Deformationen der Laufbuchse führender - Kraftangriff am Umfang der Laufbuchse verhindert.

Wenn der Kragen im Sitzbereich einen im wesentlichen konischen Abschnitt aufweist, dessen Durchmesser im wesentlichen dem Durchmesser der Rückstellfeder entspricht, und in die Rückstellfeder eingreift ermöglicht dies eine Federzentrierung. Die Konizität erleichtert die Platzierung bei ungenauer Teilezuführung.

Der Bauraumbedarf wird weiterhin gesenkt, wenn der Verschluß topfförmig ausgebildet ist und eine Wandung sowie einen Boden aufweist, und daß der topfförmige Abschnitt der Laufbuchse in einem Innenraum des Verschluß aufgenommen ist, und daß eine Endfläche der Wandung den Radialflansch in Anlage an der Bohrungsstufe hält.

Wesentliche Teile der Kolbenpumpe, insbesondere die Laufbuchse und der Abschnitt werden aufgrund der Ausstülpungen als Blechformteile ausgebildet, wobei diese im Bereich des Radialflansch mittels einer Verstemmung oder Verpressung an dem Verschluß befestigt sind.

Ganz grundsätzlich weist die erfindungsgemäße Pumpe ein gutes Saugverhalten - selbst bei niegrigen Druckmitteltemperaturen - auf, weil die Konstruktion insbesondere hinsichtlich deren Kanalführung wie auch Kolbengestaltung entsprechend erweiterte Ansaugquerschnitte erlaubt.

Weitere Einzelheiten der Erfindung gehen aus nachfolgender Beschreibung anhand der Zeichnung hervor. In der Zeichnung zeigt:
Fig. 1 eine durch eine Mittelachse getrennte erste und zweite Ausführungsform einer Kolbenpumpe im Schnitt in größerem Maßstab,
Fig. 2 eine Variante gemäß Fig. 1 in größerem Maßstab,
Fig. 3 eine dritte Ausführungsform einer Kolbenpumpe, und
Fig. 4 a - c Einzelheiten von unterschiedlichen Laufbuchsen, welche prinzipiell auf der Ausführungsform nach der Fig. 3 beruhen.

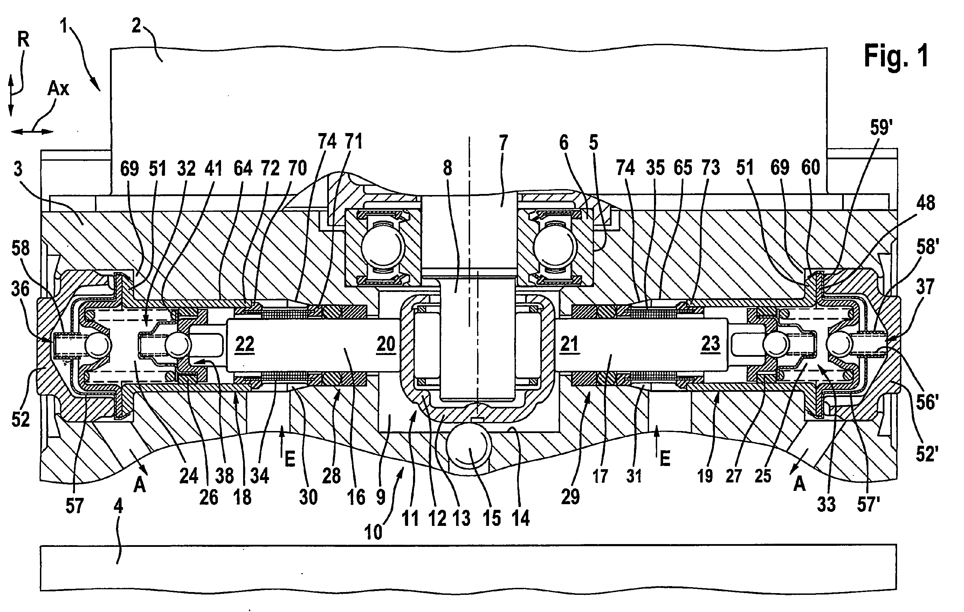

Die Fig. 1 zeigt ein Aggregat 1 mit einem schematisch skizzierten Antrieb 2, insbesondere ein Elektromotor, welcher an einem Aufnahmekörper 3 für elektromagnetisch betätigbare Ventile, Kanäle, Speicher- oder Dämpferkammern sowie eine Kolbenpumpe 10 angeflanscht ist. Auf einer gegenüberliegenden Seite des Aufnahmekörpers 3 ist eine lediglich schematisch verdeutlichte elektronische Regeleinheit 4 vorgesehen. Das dargestellte Aggregat 1 dient insbesondere der Schlupf- oder Fahrstabilitätsregelung von Kraftfahrzeugen, wobei ähnliche oder andere Anwendungsfälle möglich sind.

Eine vorzugsweise zentrale Stufenbohrung 5 des Aufnahmekörpers 3 nimmt ein abgedichtetes Wälzlager 6 der Antriebswelle 7 auf, deren freies Ende als Exzenter 8 ausgebildet ist, und in einen Kurbelraum 9 der Stufenbohrung 5 hineinragt. Prinzipiell ist es möglich, daß der Exzenter 8 unmittelbar an die Antriebswelle 7 oder Motorwelle angeschliffen, oder als gesondertes Bauelement ausgebildet und an der Antriebswelle befestigt ist. Für erhöhte Pumpenlaufdauer, kann der Kurbelraum 9 mit Leckageflüssigkeit, insbesondere mit Bremsflüssigkeit geflutet sein, wobei ein an den Kurbelraum 9 angeschlossenes Reservoir zur Flüssigkeitsaufnahme innerhalb dem Antrieb 2, dem Aufnahmekörper 3, oder der elektronischen Regeleinheit 4 dient.

Der Exzenter 8 ist mit einem einseitig durch einen topfförmigen Aussenring 12 geschlossenes Nadellager 11 versehen, dessen Topfboden 13 mit einem warzenförmigen Vorsprung punktuell sowie reibungsarm an einer Stirnseite der Antriebswelle anlegbar ist. Ein Boden 14 des Kurbelraumes 9 verfügt über eine Kugel 15, so daß der Topfboden 13 mit einer motorwellenabgewandten Außenseite reibungsarm an der Kugel 15 anliegt, und der relativ zu dem Aufnahmekörper 3 verdrehbare Außenring 12 keinen unmittelbaren Kontakt zu dem Werkstoff des Aufnahmekörpers 3 aufweist. Dadurch wird einer Reibungsbeanspruchung des Aufnahmekörpers 3 entgegengetreten, ohne verschleißresistente Werkstoffbeschichtungen, wie Eloxierungen auf Wandungen eines Aluminium-Aufnahmekörpers 3 aufbringen zu müssen.

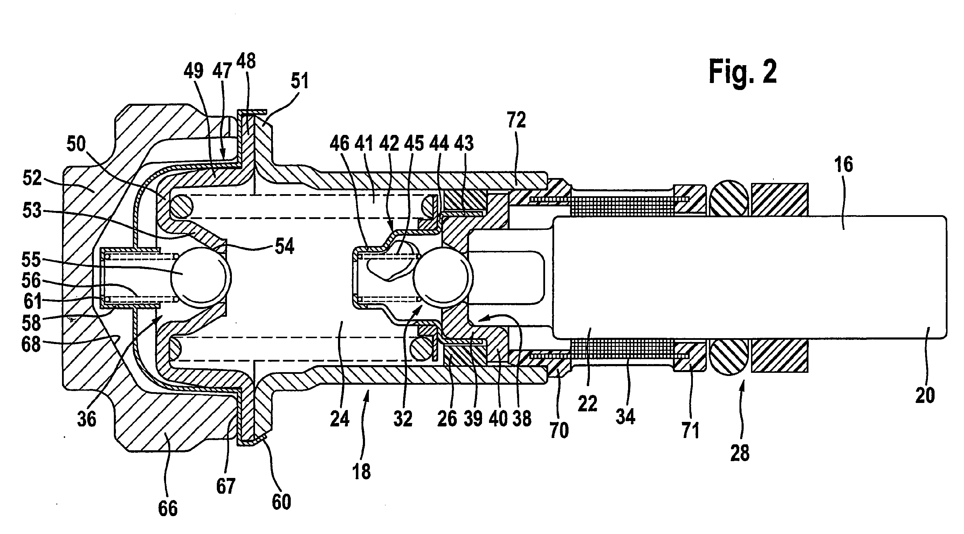

Wie die Fig. 1 zeigt, sind zwei jeweils zweiteilig ausgebildete Kolben 16,17 der Kolbenpumpe 10 innerhalb einer Stufenbohrung 64, 65 bewegbar in einer Laufbuchse 18,19 geführt angeordnet, durchgreifen mit einem ersten hydraulischen Durchmesser einen Nachlaufraum 30,31, reichen mit einem Ende 20,21 in den Kurbelraum 9 und kontaktieren dort einen Umfang des Aussenrings 12. Ein anderes Ende 22,23 der Kolben 16,17 weist einen anderen, zweiten hydraulisch wirksamen Durchmesser auf und ragt in einen Verdrängungsraum 24,25. Während das zweite Ende 22,23 der Kolben 16,17 über einen Dichtungs- und Führungsring 26,27 in der Laufbuchse 18,19 abgedichtet geführt ist, ermöglicht eine weitere Führungs- und Dichtungsanordnung 28,29 die Anordnung des Nachlaufraumes 30,31 zwischen der besagten Dichtungsanordnung 28,29 und einem, als Saugventil wirksamen Rückschlagventil 32,33. Von einem Druckmitteleinlaß E gelangt das Druckmittel über einen Kanal und ein an einer Hülse vorgesehenen Filter 34,35 in den Nachlaufraum 30,31. Im Ansaugtakt gelangt das Druckmittel bei geöffnetem Rückschlagventil (Saugventil) 32,33 in den Verdrängungsraum 24,25 und im Verdrängungstakt bei geöffnetem Rückschlagventil (Druckventil) 36,37 in einen Druckmittelauslaß A. Es bleibt hinzuzufügen, daß der wirksame hydraulische Kolbendurchmesser in dem Verdrängungsraum 24,25 zusammen mit dem hydraulisch wirksamen Durchmesser im Nachlaufraum 30,31 verbesserte Ansaugeigenschaften bei zählflüssigem Druckmittel ermöglicht. Weitere Einzelheiten der Kolbenpumpe werden anhand der Fig. 2, welche den linken Teil der Fig. 1 in größerem Maßstab zeigt, erläutert.

Wie zu ersehen ist, verfügt das stufenförmig abgesetzte sowie gabelförmig durch wenigstens eine Nut gespaltene Ende des Kolbens 16 über einen tellerförmigen Ventilsitz 38 dessen zylindrischer Wandungsteil 39 zumindest teilweise auf das Ende 22 aufgeschoben ist, und auf einer Außenseite gleichzeitig den Führungs- und Dichtring 26 trägt. Zur axialen Lagesicherung des Dichtringes 26 weist der Ventilsitz 38 einen Anschlag 40 auf. Ein gleichzeitig als Federteller für eine Kolben-Rückstellfeder 41 und eine Ventilfeder 45 wirksames Bauteil 42 oder wie in Fig. 2 einseparater Federteller liegt im Schulterbereich von axial abgekröpften Schenkeln 43 an einer Vorderseite des Ventilsitz 38 an. Radiale Schenkel 44 können in Axialrichtung flach an dem Dichtring 26 anliegen, so daß dieser an dem Kolben 16 festgelegt ist, und mit diesem relativ zu dem Aufnahmekörper 3 oszilliert. Wie die Fig. 2 weiterhin zeigt, können die in die Axialrichtung weisenden Schenkel 43 des Bauteiles 42 in einen Spalt zwischen dem zylindrischen Wandungsteil 39 des Ventilsitz 38 und dem Dichtring 26 eingreifen, wodurch der radiale Andruck des Dichtrings 26 an die Laufbuchse 18 vergrößerbar ist. Ein zylindrischer Bauteilabschnitt 46 verhindert ein Ausknicken der Ventilfeder 45.

Die Kolben-Rückstellfeder 41 erstreckt sich durch den gesamten Verdrängungsraum 24 und liegt mit einem Ende an einem kolbenfernen Widerlager 47 an, welches gleichzeitig als Boden für die Laufbuchse dient. Gemäß der Ausführungsform nach Fig. 1 ist die Laufbuchse 18 napfförmig und das Widerlager 47 ist als tellerförmig ausgestülptes Bauteil ausgebildet, welches über einen Radialflansch 48, eine Wandung 49 sowie einen Bodenbereich 50 verfügt. Wie zu ersehen ist, liegt der Radialflansch 48 flach an einem Radialflansch 51 der Laufbuchse 18 an. Während die Wandung 49 zylindrisch in Richtung Verschluß 52 ausgestülpt ist, weist der Bodenbereich 50 einen entgegengesetzt, das heißt in Richtung Kolben 16 weisenden Kragen 53 mit einem Sitz 54 für einen Ventilkörper 55 des Rückschlagventils (Druckventil) 36 auf. Folglich dient eine zwischen Kragen 53 und Wandung 49 vorgesehene, verdrängungsraumseitige Ausbauchung zur Aufnahme der Rückstellfeder 41, und eine durch den Kragen 53 selbst gebildete Ausbauchung der Aufnahme wesentlicher Teile des Rückschlagventils 36 wie insbesondere Ventilkörper 55 und Ventilfeder 56. Die genannten Bauteile sind dadurch so ineinander angeordnet, daß sie sich in Radialrichtung zumindest teilweise überschneiden, wodurch Bauraum eingespart wird. Wie weiterhin aus den Fig. 1 und 2 erhellt, weist der Kragen 53 eine weitgehend konische Form auf. Sein (Außen)Durchmesser entspricht anfänglich im wesentlichen dem (Innen-)Durchmesser der Rückstellfeder 41, um sich anschließend in Richtung Sitz 54 zu verjüngen.

Dadurch wird eine verbesserte Rückstellfederzentrierung - insbesondere während der Montage - erreicht.

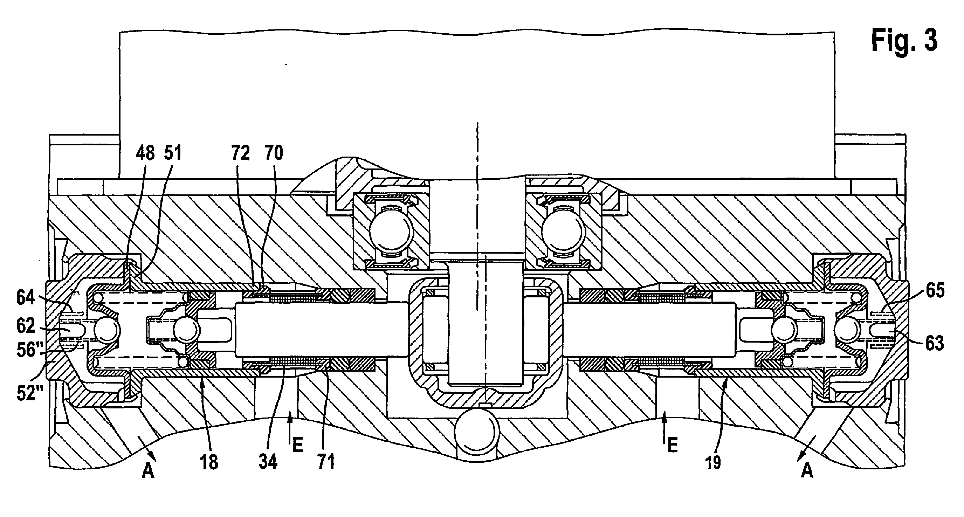

Zur Abstützung der Ventilfeder 56 des Rückschlagventils 36 sind verschiedene Maßnahmen denkbar. Wie in der Fig. 1 anhand der Ausführungsform in der rechten Zeichnungshälfte ersichtlich ist, kann die Ventilfeder 56' axial unmittelbar an dem Verschluß 52' abgestützt sein, wobei ein im wesentlichen tellerförmiges, in der Form dem Widerlager angenähertes Haltebauteil 57' mit einem Führungsabschnitt 58' für die Ventilfeder 56' versehen ist. Ein Radialflansch 59' des Haltebauteiles 57' verfügt über Randabschnitte 60, welche derart umgebogen sind, daß sie den Radialflansch 51,48 von Laufbuchse 19 und Widerlager 47' umgreifen, um eine eigenständig handhabbare Baueinheit bestehend aus Laufbuchse 19, Rückstellfeder 41, Rückschlagventilen 33,37 und dem Haltebauteil 57' zu fixieren. Gemäß einer abgewandelten Ausführungsform, wie sie aus Fig. 1 in der linken Zeichnungshälfte (sowie in größerem Maßstab aus Fig. 2) hervorgeht, ist es möglich daß das Haltebauteil 57 zusätzlich zu dem Führungsabschnitt 58 einen Anschlag 61 für die Ventilfeder 56 aufweist. Schließlich kann bei einer vereinfachten Variante gemäß Fig. 3 vollständig auf das Haltebauteil 57 verzichtet werden, indem die Ventilfeder 56" axial an dem Verschluß 52" angeschlagen ist, und dieser entweder mit einer domförmigen Erhebung 62,63 oder einer rohrstutzenförmigen Erhebung 64,65 versehen ist, wie die in der Fig. 2 gestrichelt skizziert versehen ist. Bei Rationalisierung des gesonderten Haltebauteils 57 wird die selbständig handhabbare Einheit dadurch hergestellt, daß der Verschluß 52" mit dem Radialflansch 48, 51 wie in Fig. 3 ersichtlich, verstemmt ist.

Bei allen Ausführungsformen wird die Laufbuchse von einem Verschluß 52, 52',52" in der Stufenbohrung des Aufnahmekörpers 3 gehalten. Zu diesem Zweck ist der Verschluß 52,52',52" mit dem Aufnahmekörper 3 wie in den Figuren gezeichnet verstemmt oder verclincht. Eine Verclinchung bedeutet in diesem Zusammenhang, daß der Verschluß 52, 52', 52" aus härterem Werkstoff als der Aufnahmekörper 3 ausgebildet ist, und daß der Verschluß 52,52',52" weiterhin im Bereich einer Bohrungswandung über eine Kontur verfügt, welche bei einer relativen Verschiebung zwischen Verschluß 52,52',52 " und Aufnahmekörper 3 infolge Kaltverformung eine formschlüssige Verbindung zwischen den beteiligten Bauteilen hervorruft.

Um auch bei der Bauform gemäß Fig. 1 den Verschluß 52 in die selbständig handhabbare Pumpenbaugruppe zu integrieren, ist es möglich, daß er zur Aufnahme von Teilen der Pumpenpatrone (umfassend Laufbuchse 18,19, Rückschlagventile 32,33,36,37, Rückstellfeder 41, Kolben 16,17) im wesentlichen konkav ausgebildet ist, und eine Wandung 66 mit einer Endfläche 67 sowie einen Boden 68 aufweist, wobei die Innenkontur mit einer Profilierung oder Passung aufweist, welche das Haltebauteil 57 klemmend aufnimmt. Dadurch ist eine raumsparende und dennoch montagefreundliche Anordnung gegeben. Es ist jedoch dafür zu sorgen, daß ein ausreichender Strömungsquerschnitt für das Druckmittel vorliegt.

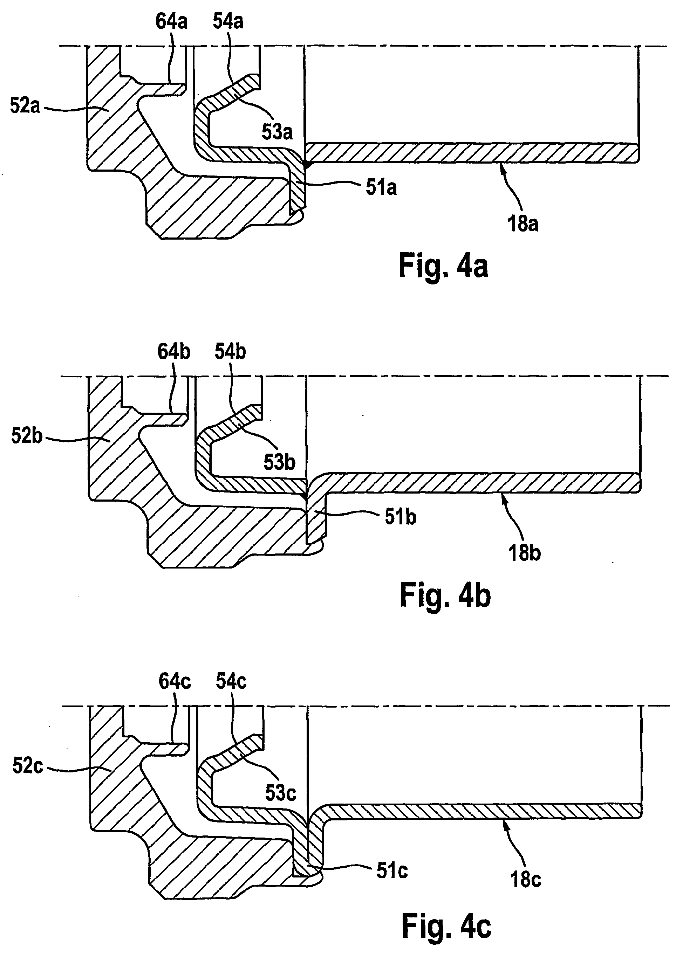

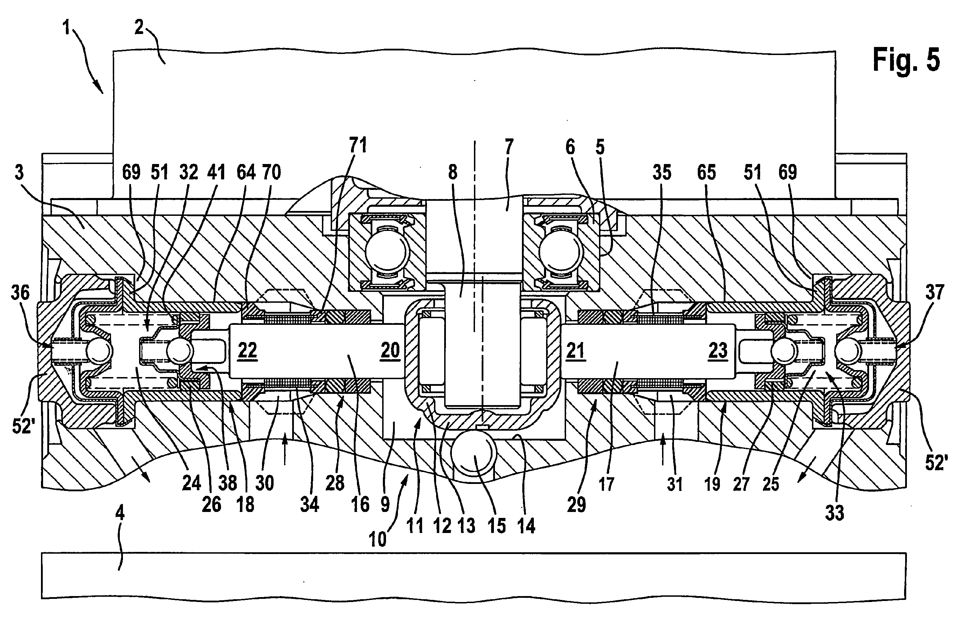

Die Figuren 3a bis 3c zeigen Bauvarianten einer vorzugsweise umformtechnisch hergestellten Laufbuchse 18 mit einem Radialflansch 51. Ganz generell wird durch den Grundgedanken der Erfindung ermöglicht, wesentliche Teile der Pumpenpatrone, insbesondere deren Laufbuchse 18,19 samt Boden (Widerlager 47) als Blechform- oder Stanzteile auszubilden, ohne deshalb eine Funktionsbeeinträchtigungen im Bereich der Rückschlagventile 36,37 infolge montagebedingter Deformationen befürchten zu müssen. Denn Halte- und Einpresskräfte werden ausgehend von dem Verschluß 52 im wesentlichen nur in einen Radialflansch 51 der Laufbuchse 18,19 eingeleitet, von dem diese sodann in eine Bohrungsstufe 69 des Aufnahmekörpers 3 übergeleitet wird. Davon ausgehend ist es möglich, die Laufbuchse 18c gemäß Fig. 4c mittels Umformung einteilig auszubilden, oder aus mehreren Teilen zusammen zu fügen, wie in den Figuren 4a,b verdeutlicht. Dabei ist das, den Boden oder Widerlager bildende Bauteil stoffschlüssig mit dem rohrförmigen Führungsabschnitt der Laufbuchse 18a,b verbunden, und der Radialflansch kann gemäß Fig. 4a an dem Boden oder gemäß Fig. 4b an dem Führungsabschnitt vorgesehen sein, ohne die Erfindung zu verlassen. In allen drei Fällen besteht jedoch eine Verstemmung zwischen Verschluß 52a,b,c und Radialflansch 51a,b,c, wie bereits betreffend Fig. 2 beschrieben.

### Bezugszeichenliste:

- 1: Aggregat
- 2: Antrieb
- 3: Aufnahmekörper
- 4: Regeleinheit
- 5: Stufenbohrung
- 6: Wälzlager
- 7: Antriebswelle
- 8: Exzenter
- 9: Kurbelraum
- 10: Kolbenpumpe
- 11: Nadellager
- 12: Außenring
- 13: Topfboden
- 14: Boden
- 15: Kugel
- 16: Kolben
- 17: Kolben
- 18: Laufbuchse
- 19: Laufbuchse
- 20: Ende
- 21: Ende
- 22: Ende
- 23: Ende
- 24: Verdrängungsraum
- 25: Verdrängungsraum
- 26: Führungsring
- 27: Führungsring
- 28: Dichtungsanordnung
- 29: Dichtungsanordnung
- 30: Nachlaufraum
- 31: Nachlaufraum
- 32: Rückschlagventil
- 33: Rückschlagventil
- 34: Filter
- 35: Filter
- 36: Rückschlagventil
- 37: Rückschlagventil
- 38: Ventilsitz
- 39: Wandungsteil
- 40: Anschlag
- 41: Rückstellfeder
- 42: Bauteil
- 43: Schenkel
- 44: Schenkel
- 45: Ventilfeder
- 46: Bauteilabschnitt
- 47: Widerlager
- 48: Radialflansch
- 49: Wandung
- 50: Bodenbereich
- 51: Radialflansch
- 52: Verschluß
- 53: Kragen
- 54: Sitz
- 55: Ventilkörper
- 56: Ventilfeder
- 57: Haltebauteil
- 58: Führungsabschnitt
- 59: Radialflansch
- 60: Halteabschnitt
- 61: Anschlag
- 62,63: Erhebung
- 64,65: Stufenbohrung
- 66: Wandung
- 67: Endfläche
- 68: Boden
- 69: Bohrungsstufe

- E: Einlaß
- A: Auslaß
- Ax: Axialrichtung
- R: Radialrichtung

## Patentansprüche

1. Kolbenpumpe (10), zum Fördern von Druckmittel in wenigstens eine Fahrzeugbremse, in einen Hauptzylinder, in einen Druckmittelbehälter, oder in einen Druckmittelspeicher, einer geregelten Fahrzeugbremsanlage mit den Merkmalen;
ein Kolben (16,17) ist in einer, mit einem Verschluß (52) versehenen, Stufenbohrung (64) eines Aufnahmekörpers (3) bewegbar angeordnet;
der Kolben (16,17) ist zumindest abschnittsweise in einer Laufbuchse (18,19) geführt;
die Laufbuchse (18,19) verfügt über ein koaxial zu dem Kolben (16,17) angeordnetes Rückschlagventil (32,33,36,37), das der Ventilation eines Arbeitsraumes (24,25) dient, in den der Kolben (16,17) eintaucht;
eine Rückstellfeder (41) ist innerhalb der Laufbuchse (18,19) zwischen einem Widerlager (47) und dem Kolben (16,17) vorgesehen,
wobei die Laufbuchse (18,19) einen Radialflansch (51) aufweist, und wobei der Radialflansch (51) zur Lagesicherung der Laufbuchse (18,19) in Axialrichtung zwischen dem Verschluß (52) und dem Aufnahmekörper (3) eingespannt ist, **dadurch gekennzeichnet, daß** die Laufbuchse (18,19) einen als Widerlager für die Rückstellfeder (41) dienenden topfförmigen Abschnitt (47) mit einer Wandung (49) und mit einem Bodenbereich (50) aufweist, an dem ein Ende der Rückstellfeder (41) anliegt, wobei der topfförmige Abschnitt (47) der Laufbuchse (18,19) im Querschnitt im wesentlichen V-förmig oder U-förmig ausgestülpt ist, so daß eine zwischen Wandung (49) und einem Kragen (53) vorgesehene Vertiefung zur Aufnahme der Rückstellfeder dient, und daß eine durch den Kragen (53) gebildete äußere Vertiefung ein Rückschlagventil (36,37) derart aufnimmt, daß sich Rückstellfeder (41), Laufbuchse (18 19) und Rückschlagventil (36,37) zumindest im Bereich des topfförmigen Abschnittes (47) in Radialrichtung (R) überschneiden.

2. Kolbenpumpe nach Anspruch 1, **dadurch gekennzeichnet, daß** die Stufenbohrung (64) eine Bohrungsstufe (69) aufweist, deren Durchmesser für eine ausschließlich axiale Anlage des Radialflanschs (51) größer ausgebildet ist, als der Radialflansch (51).

3. Kolbenpumpe nach Anspruch 1, **dadurch gekennzeichnet, daß** in einem Bodenbereich der Laufbuchse (18,19) ein Sitz (54) für ein Rückschlagventil (36,37) vorgesehen ist.

4. Kolbenpumpe nach Anspruch 3, **dadurch gekennzeichnet, daß** der Sitz (54) an dem Kragen (53) vorgesehen ist.

5. Kolbenpumpe nach Anspruch 4, **dadurch gekennzeichnet, daß** der Kragen (53) im Sitzbereich einen im wesentlichen konischen Abschnitt aufweist, dessen Durchmesser im wesentlichen dem Durchmesser der Rückstellfeder (41) entspricht, und daß der Abschnitt in die Rückstellfeder (41) eingreift.

6. Kolbenpumpe nach Anspruch 1, **dadurch gekennzeichnet, daß** der Verschluß (52) topfförmig ausgebildet ist und eine Wandung (66) mit einer Endfläche (67) sowie einen Boden (68) aufweist, und daß die Laufbuchse (18,19) zumindest mit dem Widerlager (47) in einem Innenraum des Verschlusses (52) aufgenommen ist, und daß die Endfläche (67) den Radialflansch (51) in Anlage an der Bohrungsstufe (69) hält.

7. Kolbenpumpe nach Anspruch 1, **dadurch gekennzeichnet, daß** die Laufbuchse (18,19), insbesondere das Widerlager (47) als Blechformteile ausgebildet sind, und daß diese im Bereich des Radialflansch (51) mittels einer Verstemmung oder Verpressung an dem Verschluß (52) befestigt sind.

## Claims

1. Piston pump (10) for conveying pressure medium into at least one vehicle brake, into a main cylinder, into a pressure medium container, or into a pressure medium store, of a controlled vehicle braking system, with the following features:
a piston (16, 17) is arranged movably in a stepped bore (64) in a receiving body (3), the stepped bore being provided with a closure (52);
at least sections of the piston (16, 17) are guided in a liner (18, 19);
the liner (18, 19) has a non-return valve (32, 33, 36, 37) which is arranged coaxially with respect to the piston (16, 17) and is used for the ventilation of a working space (24, 25) into which the piston (16, 17) dips;
a resetting spring (41) is provided within the liner (18, 19) between an abutment (47) and the piston (16, 17),
wherein the liner (18, 19) has a radial flange (51), and wherein the radial flange (51) is clamped between the closure (52) and the receiving body (3) in order to secure the position of the liner (18, 19) in the axial direction, **characterized in that** the liner (18, 19) has a cup-shaped section (47) which is used as an abutment for the resetting spring (41) and has a wall (49) and a base region (50) against which one end of the resetting spring (41) bears, the cup-shaped section (47) of the liner (18, 19) having a substantially V-shaped or U-shaped protuberance in cross section such that a depression which is provided between the wall (49) and a collar (53) is used to receive the resetting spring, and **in that** an outer depression formed by the collar (53) receives a non-return valve (36, 37) in such a manner that the resetting spring (41), liner (18, 19) and non-return valve (36, 37) intersect in the radial direction (R) at least in the region of the cup-shaped section (47).

2. Piston pump according to Claim 1, **characterized in that** the stepped bore (64) has a bore step (69), the diameter of which is designed to be larger than the radial flange (51) for exclusively axial contact of the radial flange (51).

3. Piston pump according to Claim 1, **characterized in that** a seat (54) for a non-return valve (36, 37) is provided in a base region of the liner (18, 19).

4. Piston pump according to Claim 3, **characterized in that** the seat (54) is provided on the collar (53).

5. Piston pump according to Claim 4, **characterized in that** the collar (53) in the seat region has a substantially conical section, the diameter of which substantially corresponds to the diameter of the resetting spring (41), and **in that** the section engages in the resetting spring (41).

6. Piston pump according to Claim 1, **characterized in that** the closure (52) is of cup-shaped design and has a wall (66) with an end surface (67) and a base (68), and **in that** the liner (18, 19) is held at least with the abutment (47) in an interior space in the closure (52), and **in that** the end surface (67) keeps the radial flange (51) in contact with the bore step (69).

7. Piston pump according to Claim 1, **characterized in that** the liner (18, 19), and in particular the abutment (47) are designed as sheet-metal moulded parts, and **in that** the latter are fastened to the closure (52) in the region of the radial flange (51) by means of caulking or pressing.

## Revendications

1. Pompe à piston (10), pour refouler un fluide sous pression dans au moins un frein de véhicule, dans un cylindre principal, dans un récipient de fluide sous pression, ou dans un accumulateur de fluide sous pression, d'une installation de frein de véhicule régulée, comprenant les caractéristiques suivantes :
un piston (16, 17) est disposé de manière mobile dans un alésage étagé (64), pourvu d'une fermeture (52), d'un corps de réception (3) ;
le piston (16, 17) est guidé au moins en partie dans une boîte de glissement (18, 19) ;
la boîte de glissement (18, 19) comporte un clapet anti-retour (32, 33, 36, 37) disposé coaxialement par rapport au piston (16, 17), qui sert à la ventilation d'un espace de travail (24, 25) dans lequel plonge le piston (16, 17) ;
un ressort de rappel (41) est prévu à l'intérieur de la boîte de glissement (18, 19) entre une butée (47) et le piston (16, 17),
la boîte de glissement (18, 19) présentant une bride radiale (51) et la bride radiale (51) étant serrée en vue de la fixation en position de la boîte de glissement (18, 19) dans la direction axiale entre la fermeture (52) et le corps de réception (3), **caractérisée en ce que** la boîte de glissement (18, 19) présente une portion (47) en forme de pot servant de butée pour le ressort de rappel (41), avec une paroi (49) et une région de fond (50), contre laquelle s'applique une extrémité du ressort de rappel (41), la portion (47) en forme de pot de la boîte de glissement (18, 19) étant retournée en section transversale essentiellement en forme de V ou de U, de sorte qu'un renfoncement prévu entre la paroi (49) et un collet (53) puisse recevoir le ressort de rappel,
et **en ce qu'**un renfoncement extérieur formé par le collet (53) reçoit un clapet anti-retour (36, 37) de telle sorte que le ressort de rappel (41), la boîte de glissement (18, 19) et le clapet anti-retour (36, 37) se coupent au moins dans la région de la portion (47) en forme de pot dans la direction radiale (R).

2. Pompe à piston selon la revendication 1, **caractérisée en ce que** l'alésage étagé (64) présente un étage d'alésage (69) dont le diamètre est réalisé pour une application exclusivement axiale de la bride radiale (51) de manière à être plus grand que la bride radiale (51).

3. Pompe à piston selon la revendication 1, **caractérisée en ce que** dans une région de fond de la boîte de glissement (18, 19) est prévu un siège (54) pour un clapet anti-retour (36, 37).

4. Pompe à piston selon la revendication 3, **caractérisée en ce que** le siège (54) est prévu sur le collet (53).

5. Pompe à piston selon la revendication 4, **caractérisée en ce que** le collet (53) présente, dans la région de siège, une portion essentiellement conique, dont le diamètre correspond essentiellement au diamètre du ressort de rappel (41), et **en ce que** la portion vient en prise dans le ressort de rappel (41).

6. Pompe à piston selon la revendication 1, **caractérisée en ce que** la fermeture (52) est réalisée en forme de pot et présente une paroi (66) avec une surface d'extrémité (67) ainsi qu'un fond (68), et **en ce que** la boîte de glissement (18, 19) est reçue au moins avec la butée (47) dans un espace interne de la fermeture (52), et **en ce que** la surface d'extrémité (67) maintient la bride radiale (51) en appui contre l'étage d'alésage (69).

7. Pompe à piston selon la revendication 1, **caractérisée en ce que** la boîte de glissement (18, 19), en particulier la butée (47), sont réalisées sous forme de pièces façonnées en tôle, et **en ce que** ces pièces sont fixées à la fermeture (52) dans la région de la bride radiale (51) au moyen d'un matage ou d'un pressage.
